Europäisches Patentamt

**European Patent Office**

**Office européen des brevets**

(19)

(11) Veröffentlichungsnummer: **0 114 635**
**B1**

(12) # EUROPÄISCHE PATENTSCHRIFT

(45) Veröffentlichungstag der Patentschrift:
**01.07.87**

(51) Int. Cl.⁴: **F 24 J 2/46,** F 28 F 1/02,
F 16 L 9/02

(21) Anmeldenummer: **84100411.2**

(22) Anmeldetag: **17.01.84**

(54) **Rohr mit D-förmigem Querschnitt.**

(30) Priorität: **21.01.83 DE 3301859**

(43) Veröffentlichungstag der Anmeldung:
**01.08.84 Patentblatt 84/31**

(45) Bekanntmachung des Hinweises auf die Patenterteilung:
**01.07.87 Patentblatt 87/27**

(84) Benannte Vertragsstaaten:
**AT BE CH DE FR GB IT LI LU NL SE**

(56) Entgegenhaltungen:
**EP-A-0 051 492**
**FR-A-2 098 338**
**FR-A-2 487 702**
**LU-A-83 291**
**US-A-4 261 334**

(73) Patentinhaber: **E. Cacarda GmbH, Ohmstrasse 3,
D-8602 Strullendorf (DE)**

(72) Erfinder: **Cacarda, Jaroslav, Am Weinberg 15,
D-8602 Strullendorf (DE)**

(74) Vertreter: **LOUIS, PÖHLAU, LOHRENTZ &
SEGETH, Kesslerplatz 1 P.B. 3055, D-8500
Nürnberg (DE)**

## Beschreibung

Die Erfindung betrifft ein Rohr, das für aus geraden Rohrstrecken und diese verbindenden Bögen bestehende Wäremtauscherschlangen vorgesehen ist, und das einen D-förmigen Querschnitt aufweist, wobei eine ebene Fläche von einer bogenförmigen Fläche überspannt ist, und die Übergänge zwischen der ebenen Fläche und der diese überspannenden bogenförmigen Fläche Rundungen mit einem Radius aufweist.

Sonnenkollektorplatinen weisen eine ebene Tragplatte und mit der Tragplatte innig verbundene Rohrschlangen auf. Die Rohrschlangen sind von einem Wärmeträgermedium durchflossen, auf das die von der Tragplatte aufgenommene Wärme übertragen wird. Sowohl die Tragplatte als auch die Rohrschlange bestehen vorzugsweise aus einer Legierung mit einem hohen Kupferanteil, da hierbei der Wärmeübertragungskoeffizient hoch ist, und die innige Verbindung zwischen diesen Teilen beispielsweise in einem Lötvorgang einfach herstellbar ist. Um einen guten Wärmeübergang zwischen der Tragplatte und der Rohrschlange zu erhalten, soll die an der Tragplatte anliegende Fläche der Rohrschlange groß sein. Die Rohrschlange wird im allgemeinen mit einer ebenen Fläche ausgebildet, die von einer bogenförmigen Fläche überspannt ist. Die die ebene Fläche überspannende bogenförmige Fläche weist auf dem größten Teil ihrer Erstreckung meistens einen kreisbogenförmigen Verlauf auf.

Ein Rohr der eingangs genannten Art ist aus der US-A-4 261 334 bekannt. Bei diesem bekannten Rohr ist der Radius der Rundungen an den Übergängen zwischen der ebenen Fläche und der diese überspannenden bogenförmigen Fläche einfach durch die Abplattung eines ursprünglich einen kreisförmigen Querschnitt aufweisenden Rohres gegeben. Das bedeutet, daß bei diesem bekannten Rohr der Radius der Rundungen nicht innerhalb eines bestimmten Bereiches möglicher konstanter Radien genau festgelegt ist. In Abhängigkeit von der Wanddicke dieses bekannten Rohres wird der Radius der Rundungen bei der Abplattung des Rohres also einmal kleiner und einmal größer sein. Bei dem in Figur 8 der US-A-4 261 334 dargestellten Rohr liegt das Verhältnis des Radius jeder Rundung zur größten inneren Weite bei 1:8, d.h. das Verhältnis ist sehr klein.

Da die benachbarte gerade Rohrstrecken miteinander verbindenden Bögen bei diesem bekannten Rohr verhältnismäßig kurz sind, wölbt sich der äußere bzw. der innere Rand jedes bogenförmigen Abschnittes der Rohrschlange beim Biegen des Rohres nach oben bzw. nach unten, so daß sich zwischen den bogenförmigen Abschnitten der Wärmetauscherschlange und einer ebenflächigen Platine ein Spalt ergibt, der den thermischen Wirkungsgrad der Sonnenkollektorplatine negativ beeinflußt.

Der vorliegenden Erfindung liegt die Aufgabe zugrunde, ein Rohr der eingangs genannten Art zu schaffen, mit dem in einem Stück fortlaufend eine Rohrschlange aus geraden Rohrstrecken und aus Bögen gebildet wird, wobei die abgeplattete ebene Fläche des einen D-förmigen Querschnitt aufweisenden Rohres auch im Bogenbereich der Rohrschlange ihre Ebenheit beibehält.

Diese Aufgabe wird erfindungsgemäß dadurch gelöst, daß der Radius jeder der beiden Rundungen seinen Ausgangspunkt auf der die größte innere Weite bestimmenden Achse hat, die von der ebenen Fläche einen dem Radius entsprechenden Abstand aufweist, wobei der Radius einen konstanten Wert besitzt, der im Bereich von einem Drittel bis einem Sechstel der größten inneren Weite liegt, und daß die ebene Fläche der geraden Rohrstrecken der Wärmetauscherschlange und die ebene Fläche der sie verbindenden Bögen in einer gemeinsamen Ebene liegen.

Durch diese einen definierten Radius aufweisenden Rundungen zwischen der ebenen Fläche und dem die ebene Fläche überspannenden Bogen ist es möglich, das einen D-förmigen Querschnitt aufweisende Rohr im kalten Zustand in die gewünschte Rohrschlangenform zu biegen, wobei die Ebenheit der ebenen Fläche entlang der gesamten Längserstreckung der Rohrschlange beibehalten bleibt. Damit ist eine einwandfreie Verbindung zwischen dem Rohr und der Tragplatte sichergestellt, welche einfach herstellbar ist. Beispielsweise wird diese Verbindung durch die Ausbildung eines Lötmittelbettes, in das das Rohr eingedrückt wird, hergestellt. Auf diese Weise wird auf einer großen Fläche ein guter Wärmeübergang von der Tragplatte zum Rohr gewährleistet.

Bei einer bevorzugten Ausbildung des erfindungsgemäßen Rohres beträgt bei einem Radius von einem Sechstel der größten inneren Weite die innere Höhe zwischen der ebenen Fläche und dem Scheitel der bogenförmigen Fläche die Hälfte der größten inneren Weite.

Entscheidend ist beim erfindungsgemäßen Rohr der Radius der Rundungen zwischen der ebenen Fläche und der die ebene Fläche überspannenden bogenförmigen Fläche. Es wurde festgestellt, daß das mit der Erfindung angestrebte Ziel der Kaltbiegbarkeit des einen D-förmigen Querschnitt aufweisenden Rohres bei bester Einhaltung der Ebenheit der zur Anlage an der Tragplatte bestimmten Fläche dann gut zu erreichen ist, wenn der Radius der Rundungen einen konstanten Wert aufweist, der im Bereich von einem Drittel bis einem Sechstel der größten inneren Weite beträgt. Besonders gute Ergebnisse haben sich bei einem Wert von einem Drittel der größten inneren Weite ergeben.

Als Material für das D-Rohr gemäß der Erfindung kommt vorzugsweise Kupfer bzw. eine stark kumpferhaltige Legierung - ohne Beschränkung hierauf - zum Einsatz, wobei die Wandstärke dieses Materials bevorzugterweise um etwa 1 mm liegt. Für andere Materialien mögen andere Wandstärken, insbesondere im Hinblick auf ihre Biegefähig- oder Verformbarkeit günstiger sein, insofern beziehen sich die oben und später angegebenen Maßverhältnisse auf die Innenmaße des abgeplatteten D-Rohres.

Die Erfindung wird anhand der Zeichnungen erläutert.

Es zeigen:

Fig. 1 eine Draufsicht auf einen Rohrbogen aus einem D-Rohr gemäß der Erfindung sowie einen Querschnitt eines solchen D-Rohres, und

Fig. 2 einen stark vergrößerten, nicht maßstabsgetreuen Querschnitt eines D-Rohres gemäß der Erfindung.

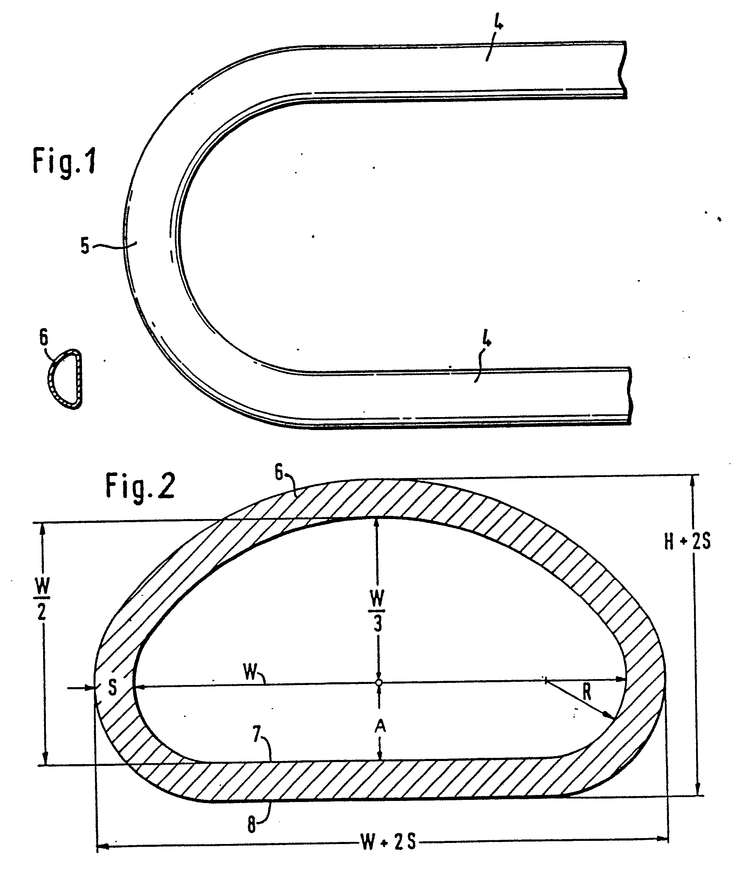

Wie Fig. 1 zeigt, wird ein aus geraden Rohrstrecken 4 und diese verbindendem Rohrbogen 5 bestehendes U-Rohrstück einer Rohrschlange von einem Rohr 6 mit dem Wesen nach D-förmigem Querschnitt gebildet, d.h. das Rohr 6 hat eine ebene und eine diese überspannende bogenförmige Fläche. Die Übergänge von der ebenen in die bogenförmige Fläche weisen eine Rundung auf.

Wie Fig. 2 zeigt, hat das Rohr einen D-förmigen Querschnitt, wobei die Fläche 7 bzw. 8 abgeplattet, d.h. eben ausgestaltet ist. Das Rohr hat zwei Achsen, die sich rechtwinklig schneiden und von denen die eine (W) die Weite, die andere (H) die Höhe des Rohrinnenquerschnitts bestimmt.

Vorzugsweise ist das Rohr so abgeplattet, daß -ausgehend von der größten inneren Weite W des Rohres - der Schnittpunkt 0 der beiden Achsen durch eine Stelle bestimmt ist, die durch einen Abstand A von der ebenen Rohrinnenfläche 7 bzw. durch ein Drittel der Rohrweite W (also W/3) vom oberen inneren Rohrscheitel gegeben ist.

Der Ausgangspunkt des die Rundung zwischen ebener Fläche 7 und diese überspannender Bogenfläche bestimmenden Radius liegt genau auf der die größte innere Weite des Rohres festlegenden Achse W oder zumindest sehr nahe an dieser und der Radius R dieser Rundung soll erfindungsgemäß im Bereich von einem Sechstel bis zu einem Drittel der Weite W liegen. Die besten Ergebnisse in bezug auf Kaltbiegefähigkeit des Rohres und Einhaltung der Ebenheit seiner abgeplatteten Fläche 7 bzw. 8 haben sich bei Werten für den Radius der Rundung ergeben, die bei W/3 liegen.

Das D-Rohr gemäss der Erfindung hat vorzugsweise eine gleichbleibende Wandstärke S, die etwa im Bereich von 1 - 2 mm liegt.

Ein gemäss der Erfindung ausgebildetes D-Rohr lässt sich im kalten Zustand mit Hilfe einer relativ einfachen Technik in die in Fig. 2 angedeutete Form biegen, wobei die Fläche 7 und die parallel hierzu verlaufende Aussenfläche 8 ihre Ebenheit beibehalten, so dass hier eine grosse Auflagefläche gegenüber der Tragplatte gebildet wird, die eine einfach herzustellende Verbindung zwischen der Fläche 8 und der Tragplatte durch einen Lötvorgang, z. B. in einem Ofen, ermöglicht, wobei eine eindeutige Anlage der Fläche B an der Tragplatte ohne Einschluss von Hohlräumen und damit ein guter Wärmeübergang von der Tragplatte auf das D-Rohr bzw. den in diesem fliessenden Wärmeträger gewährleistet sind. Insofern wird nicht nur die Herstellung eines Wärmetauschers, insbesondere einer Sonnenkollektorplatine, durch den Wegfall von besonderen Übergangsstücken zwischen geraden Rohrstrecken und Rohrbogen sowie Lötvorgängen zwischen diesen Teilen, um eine fortlaufende Rohrschlange zu erhalten, ganz bedeutend vereinfacht, es wird darüber hinaus die am Wärmeübergang teilnehmende Fläche erheblich vergrössert.

Es sei abschliessend noch erwähnt, dass der erfindungsgemässe Rohr-Querschnitt selbstverständlich nicht nur für Rohre aus Kupfer oder Kupferlegierungen, sondern für Metallrohre ganz allgemein in vorteilhafter Weise eingesetzt werden kann, wenn diese Rohre entsprechend zu biegen sind. Es wird insbesondere auf die Verwendung von Edelstahl oder Aluminium verwiesen.

**Patentansprüche**

1. Rohr (6), das für aus geraden Rohrstrecken (5) und diese verbindenden Bögen (4) bestehende Wärmetauscherschlangen vorgesehen ist, und das einen D-förmigen Querschnitt aufweist, wobei eine ebene Rohrinnenfläche (7) von einer bogenförmigen Fläche überspannt ist, und die Übergänge zwischen der ebenen Rohrinnenfläche und der diese überspannenden bogenförmigen Fläche Rundungen mit einem Radius aufweisen,
dadurch gekennzeichnet,
daß der Radius (R) jeder der beiden Rundungen seinen Ausgangspunkt auf der die größte innere Weite (W) bestimmenden Achse hat, die von der ebenen Rohrinnenfläche (7) einen dem Radius (R) entsprechenden Abstand (A) aufweist, wobei der Radius (R) einen konstanten Wert besitzt, der im Bereich von einem Drittel bis einem Sechstel der größten inneren Weite (W) liegt, und daß die ebene Außenfläche (8) der geraden Rohrstrecken (4) der Wärmetauscherschlange und die ebene Außenfläche der sie verbindenden Bögen (5) in einer gemeinsamen Ebene liegen.

2. Rohr nach Anspruch 1,
dadurch gekennzeichnet,
daß die innere Höhe (H) des Rohres (6) zwischen der ebenen Rohrinnenfläche (7) und dem Scheitel der bogenförmigen Fläche kleiner ist als die größte innere Weite (W) zwischen den beiden Rundungen.

3. Rohr nach Anspruch 2,
dadurch gekennzeichnet,
daß bei einem Radius (R) von einem Sechstel der größten inneren Weite (W) die innere Höhe (H) zwischen der ebenen Rohrinnenfläche (7) und dem Scheitel der bogenförmigen Fläche die Hälfte der größten inneren Weite (W) beträgt.

**Claims**

1. Tube (6) which is intended for heat exchanger coils consisting of straight tube sections (4) and bends (5) joining the latter, and which has a D-shape cross section, a flat tube inner area (7) having an arch-shaped area bowing over it, and the transitions between the flat tube inner area and the arch-shaped area bowing over it having curved portions with a radius, characterized in that the radius (R) of each of the two curved portions has its starting point on the axis which determines the greatest inner width (W) and which has a distance (A) from the flat tube inner area (7) corresponding to the radius (R), the radius (R) having a constant value which lies in the range from one third to one sixth of the greatest inner width (W), and in that the flat outer area (8) of the straight tube sections (4) of the heat exchanger coil and the flat outer area of the bends (5) joining them lie in a common plane.

2. Tube according to Claim 1, characterized in that the inner height (H) of the tube (6) between the flat tube inner area (7) and the vertex of the arch-shaped area is smaller than the greatest inner width (W) between the two curved portions.

3. Tube according to Claim 2, characterized in that, with a radius (R) of one sixth of the greatest inner width (W), the inner height (H) between the flat tube inner area (7) and the vertex of the arch-shaped area is half the greatest inner width (W).

**Revendications**

1. Tuyau (6), qui est prévu pour des serpentins d'échangeur de chaleur constitués de tronçons tubulaires (4) droits et de parties courbes (5) reliant ceux-ci et qui, présente une section transversale en forme de D, une face interne plane (7) du tuyau étant recouverte par une face de forme arquée et les transitions entre la face interne plane du tuyau et la face de forme arquée qui recouvre celle-ci présentant des arrondis ayant un rayon, caractérisé en ce que le rayon (R) de chacun des deux arrondis a son point de départ sur l'axe qui détermine la plus grande largeur interne (W) et qui présente une distance (A) par rapport à la face interne plane (7) du tuyau qui correspond au rayon (R), le rayon (R) ayant une valeur constante qui est de l'ordre d'un tiers à un sixième de la plus grande largeur interne (W) et en ce que la face externe plane (8) des tronçons tubulaires droits (4) du serpentin d'échangeur de chaleur et la face externe plane des parties courbes (5) qui les relient sont situées dans un plan commun.

2. Tuyau suivant la revendication 1, caractérisé en ce que la hauteur interne (H) du tuyau (6) entre la face interne plane (7) du tuyau et le sommet de la face de forme arquée est plus petite que la plus grande largeur interne (W) entre les deux arrondis.

3. Tuyau suivant la revendication 2, caractérisé en ce que pour un rayon (R) d'un sixième de la plus grande largeur interne (W) la hauteur interne (H) entre la face interne plane (7) du tuyau et le sommet de la face de forme arquée est égale à la moitié de la plus grande largeur interne (W).

Fig.1

Fig.2